# EUROPÄISCHE PATENTSCHRIFT

(11) **EP 0 856 453 B1**
(45) Veröffentlichungstag und Bekanntmachung des Hinweises auf die Patenterteilung: **29.03.2006**
(21) Anmeldenummer: 97121894.6
(22) Anmeldetag: 12.12.1997
(51) Int. Cl.: B62D 5/09, B62D 1/28, A01B 69/04, B62D 5/30, B62D 7/14

(54) **Elektrohydraulisches Lenksystem für Fahrzeuge**
Electro-hydraulic steering system for vehicles
Système de direction électrohydraulique pour véhicules

(30) Priorität: 01.02.1997 DE 19703846
(43) Veröffentlichungstag der Anmeldung: 05.08.1998
(73) Patentinhaber: CLAAS KGaA, 33428 Harsewinkel (DE)
(72) Erfinder: Diekhans, Norbert, Dr., 33335 Gütersloh (DE)

(56) Entgegenhaltungen:
- EP-A- 0 339 611
- EP-A- 0 636 530
- WO-A-94/13523
- DE-A- 2 150 298
- DE-C- 3 037 221
- US-A- 4 568 825
- US-A- 4 931 930
- US-A- 5 086 870
- US-A- 5 234 070
- US-A- 5 373 911
- US-A- 5 555 503
- US-A- 5 747 950

## Beschreibung

Die Erfindung bezieht sich auf ein elektrohydraulisches Lenksystem für Fahrzeuge, insbesondere für in der Landwirtschaft eingesetzte Vielzweckfahrzeuge (Traktoren, selbstfahrende Arbeitsmaschinen wie Feldhäcksler oder Mähdrescher), gemäß dem Oberbegriff von Patentanspruch 1.

Ein derartiges Lenksystem ist beispielsweise von Feldhäckslern für die Maisernte bekannt. Das Lenksystem umfasst eine automatische Lenkung (Autopilot) zur Erleichterung und Optimierung des Arbeitseinsatzes auf dem Feld und eine manuelle Lenkung per Lenkrad für die Straßenfahrt. Die automatische Lenkung besitzt mechanisch auslenkbare Taster als automatische Lenksignalgeber für die Orientierung beim Fahren in den Maisreihenkulturen. Dabei wird jeweils durch die Auslenkung beim Berührungskontakt mit den Maisstengeln ein elektrischer Lenksignal-Sollwert erzeugt. Dieser Lenksignal-Sollwert wird einer elektronischen Steuer-und Auswerteeinrichtung zugeführt. Gleichzeitig empfängt diese Steuer- und Auswerteeinrichtung auch die von einem Sensor ermittelten Radeinschlagwinkel-Istwerte der gelenkten Räder. Aus dem Vergleich von Radeinschlagwinkel-Istwert mit dem automatisch erzeugten Lenksignal-Sollwert wird dann von der Steuer- und Auswerteeinrichtung ein Ansteuersignal für ein elektrisch betätigbares, hydraulisches Steuerventil erzeugt, das die Beaufschlagung des die lenkbaren Räder verstellenden Lenkzylinders mit Hydralikflüssigkeit regelt. Dabei werden die gelenkten Räder über den Lenkzylinder entsprechend der automatisch erzeugten Lenksignal-Sollwerte jeweils so verstellt, daß das Fahrzeug für den Ernteeinsatz optimal entlang der Maisreihen fährt.

Die manuelle Lenkung des Feldhäckslers ist dabei als sogenannte hydrostatische Lenkung in Drehschieberbauart ausgelegt. Dabei wird durch Drehen des Lenkrades ein mit der Lenkwelle mechanisch gekoppelter Drehschieber verdreht, wodurch ein Steuerquerschnitt geöffnet wird, der den Volumenstrom der Hydraulikflüssigkeit zum Lenkzylinder freigibt.

Eine solche hydrostatische manuelle Lenkung hat jedoch einige Nachteile.

Zum einen ist der konstruktive Aufwand relativ groß, da aufgrund der relativ großen Entfernung zwischen Lenkrad/Lenkwette und der Lenkachse, wo sich der Lenkzylinder befindet, entsprechend lange Hydraulikleitungen zu verlegen sind.

Zum anderen besitzt eine hydrostatische Lenkung aufgrund der notwendigerweise vorhandenen Überdekkung des Drehschiebers für den Steuerquerschnitt ein relativ großes Lenkspiel von bis zu ± 5°.

Weiterhin ist das dynamische Verhalten, insbesondere die Verzögerungszeit zwischen dem Beginn der Lenkradbewegung und der Lenkzylinderbewegung. neben der Größe des oben erwähnten Lenkspiels in schwer zu beeinflussender Weise von der Art der hydraulischen Verschattung und der verwendeten hydraulischen Komponenten abhängig, da eine Optimierung durch eine Abstimmung _der hydraulischen Komponenten nur schwer zu erzielen ist. Das unzureichende dynamische Verhalten erschwert dem Fahrer die exakte Geradeausfahrt, was bei hohen Fahrgeschwindigkeiten eine große Anforderung an die Konzentration des Fahrers stellt.

Aus der US 5,234,070 ist zudem eine Lenksystem bekannt geworden, bei dem zwischen manuellem Betrieb und Automatikbetrieb umgeschaltet werden kann. Dabei übemimmt eine elektrische Steuereinheit nur dann die Koordination der automatischen Lenkung, wenn das Fahrzeug im Automatikmodus betrieben wird. Im manuellen Betrieb werden durch die Steuereinrichtung keine Lenksignale generiert, sodass derartige Systeme immer den Nachteil haben, dass die lenkbaren Achsen mit zwei Lenksystemen, einem mechanischen und einem automatischen Lenksystem, ausgerüstet sein müssen oder eine mechanische Verbindung zwischen dem Lenksignaterzeuger und den zu lenkenden Achsen bestehen muss. Beide Voraussetzungen führen zu einem erhöhten konstruktiven Aufwand der sowohl einen größeren Bauraum als auch höhere Kosten nach sich zieht. Zudem ist die Generierung der automatischen Lenksignale auf die Ansteuerung der Elektroventile eines hydrostatischen Fahrantriebs beschränkt. Derartige Systeme sind nicht in der Lage und auch nicht dafür bestimmt georeferenzierte Lenksignale zu erzeugen.

Aufgabe der Erfindung ist es daher, ein Lenksystem mit einer manuellen und einer automatischen Lenkung zu schaffen, das konstruktiv vereinfacht ist und dabei zuverlässig und sicher arbeitet.

Diese Aufgabe wird durch die kennzeichnenden Merkmale des Patentanspruches 1 gelöst. Die sich daran anschließenden Unteransprüche enthalten vorteilhafte Ausgestaltungen der Erfindung.

Erfindungsgemäß ist bei dem elektrohydraulischen Lenksystem für Fahrzeuge, das neben der manuellen Lenkung eine automatische Lenkung umfasst, für die manuelle Lenkung ein Lenksignalgeber, vorzugsweise ein Lenkrad mit einem elektronischen Drehwinkelgeber zur Messung des Lenkradwinkels, vorgesehen, der aus einer manuellen Stellbewegung einen dazu entsprechenden elektrischen Lenksignal-Sollwert erzeugt. Dieser Lenksignal-Sollwert ist dann - wie der automatische Lenksignal-Sollwert - einer Steuer- und Auswerteeinrichtung zugeführt, die auch die Radeinschlagwinkel-Istwerte empfängt. Die Steuer- und Auswerteeinrichtung ermittelt dann anhand von einem implementierten Regelalgorithmus durch den Vergleich von Radeinschlagwinkel-Istwert mit dem manuell erzeugten Lenksignal-Sollwert ein elektrisches Ansteuersignal für das hydraulische Steuerventil.

Indem der automatische Lenksignal-Sollwert (Δ_{1,2}) in Verbindung mit einer zuvor geplanten, digitalisierten Fahrtroute, welche auf einer im Fahrzeug integrierten EDV-Anlage gespeichert ist erzeugt wird, wird sichergestellt, dass auf konstruktive einfache Weise eine zuverlässige und sicher arbeitende automatische Lenkung eines Fahrzeugs realisierbar ist.

Vorzugsweise wird für die manuelle Lenkung und die automatische Lenkung dieselbe Steuer- und Auswerteeinrichtung verwendet.

Bei dem **erfindungsgemäßen** Lenksystem wird sowohl der automatische Lenkvorgang als auch der manuelle Lenkvorgang von einem elektrischen Signal eingeleitet. Dies vereinfacht den konstruktiven Aufwand gegenüber den bisher eingesetzten Lenksystemen, die ebenfalls für eine manuelle und eine automatische Lenkung ausgelegt sind, erheblich.

Das elektrisch betätigbare, hydraulische Steuerventil kann in unmittelbarer Nahe zur Lenkachse mit dem Lenkzylinder angeordnet sein. Lange Hydraulikleitungen bis zum Lenksignalgeber (z.B. Lenkrad) entfallen. Das Verlegen der elektrischen Leitungen ist konstruktiv viel einfacher zu realisieren.

Dies ist in besonderer Weise bei Fahrzeugen von Vorteil, die eine um 180° schwenkbare Fahrerkabine aufweisen (z.B. bei Schleppern). Beim Verschwenken der Fahrerkabine gemeinsam mit dem Lenkrad/Lenkwelle müssen im Unterschied zum Stand der Technik keine sperrigen und unflexiblen Hydraulikleitungen, die an dem an der Lenkwelle montierten Drehschieber angeflanscht sind, mitverschwenkt werden. Dadurch, daß in der Fahrerkabine nur noch manuell einelektrisches Lenksignal erzeugt wird, wird der konstruktive Aufwand erheblich vereinfacht.

Besonders auch bei Fahrzeugen mit einer lenkbaren Vorder- und Hinterachse (Allradlenkung) erbringt der Einsatz des erfindungsgemäßen Lenksystems eine erhebliche Reduktion des für die Verlegung der Hydraulikleitungen ansonsten notwendigen konstruktiven Aufwands, da doppelt so viele Lenkzylinder anzusteuern sind

Ein weiterer Vorteil des erfindungsgemäßen Lenksystems ist, daß das Lenkspiel für die manuelle Lenkung bis auf Null herabsetzbar ist.

Außerdem ist das dynamische Verhalten zwischen dem manuellen Lenksignalgeber (z.B. Lenkrad) und den gelenkten Rädern durch die Verwendung von digitaler Elektronik, insbesondere von Mikroprozessoren, in der Steuer- und Auswerteeinrichtung auf einfache Weise durch entsprechende Steuer- und Recelprogramme beeinflußbar.

Auf diese Weise ist auch die Lenkübersetzung (Verhältnis von manuellem Stellweg und Lenkzylinderweg/Radeinschlagwinkel-Verstellung) einfach einzustellen und an verschiedene Arbeitsbedingungen variabel anpaßbar.

Die Betriebssicherheit des Lenksystems wird dadurch erreicht, daß sowohl bzgl. der elektronischen Steuer- und Auswerteeinrichtung als auch bzgl. der hydraulischen Ansteuerung des Lenkzylinders eine Redundanz vorhanden ist. Zu diesem Zwecke weist die Steuer- und Auswerteeinrichtung mindestens zwei voneinander unabhängige Steuer- und Auswerteeinheiten und eine Fehlererkennungseinheit auf, die zum Austausch von Auswerteergebnissen untereinander verbunden sind. Es wird immer nur einer Steuer- und Auswerteeinheit das Recht verliehen, das elektrisch betätigbare, hydraulische Steuerventil anzusteuern Im Falle eines Fehlers wird die fehlerhafte Steuer- und Auswerteeinheit von der Fehlererkennungseinheit deaktiviert. Darüber hinaus ist es vorgesehen, die redundant vorhandenen Steuer- und Auswerteeinheiten in zwei autonomen Geräten mit separater Stromversorgung unterzubringen.

Die Redundanz auf Seiten der hydraulischen Ansteuerung des Lenkzylinders besteht darin, daß zur Regelung der Beaufschlagung des Lenkzylinders mit Hydraulikflüssigkeit zwei parallel geschaltete, elektrisch betätigbare, hydraulische Steuerventile vorgesehen sind. Sollte in einem Steuerventil eine Störung auftreten, beispielsweise eine Verstopfung des Ventilleitungsquerschnittes infolge von Verunreinigungen in der Hydraulikflüssigkeit, kann die Regelung des Volumenstromes zum Lenkzylinder von dem anderen Steuerventil übernommen werden.

Außerdem ist bei dem erfindungsgemäßen Lenksystem die Gefahr von defekten Hydraulikleitungen verringert, da die Steuerventile in unmittelbarer Nähe zu den Lenkzylindern angeordnet sind und somit störanfälligere lange Hydraulikleitungen entfallen.

Neben der einleitend erwähnten automatischen Lenkung für Feldhäcksler mit Tastern als automatischen Lenksignalgebern fur die Orientierung in Reihenkulturen kann das Lenksystem auch andere automatische Lenksignalgeber umfassen. So ist es beispielsweise vorgesehen, Echolot- oder Laser-Ortungseinheiten als automatische Lenksignalgeber einzusetzen. Auch ein hochpräzises Echtzeitortungssystem (z.B. ein Satellitennavigationssystem - GPS-Empfänger) zur Bestimmung der Position und des Richtungsvektors der Fahrbewegung ist als automatischer Lenksignalgeber vorgesehen, wobei in Verbindung mit einer zuvor geplanten, digitalisierten Fahrtroute, welche auf einer im Fahrzeug integrierten EDV-Anlage gespeichert ist, der automatische Lenksignal-Sollwert erzeugt wird.

Das Lenksystem kann auch zwei oder mehrere unterschiedliche automatische Lenksignalgeber aufweisen, die wahlweise aktivierbar sind.

Anhand der beigefügten Zeichnungen wird die Erfindung nachfolgend näher erläutert. Es zeigt:
- Fig. 1: eine schematische Darstellung des Lenksystems in einer ersten Ausführungsform,
- Fig. 2: eine schematische Darstellung des Lenksystems in einer anderen Ausführungsform, (auf die Darstellung der Lenkachse wurde verzichtet)
- Fig. 3: eine schematische Darstellung des Lenksystems mit jeweils einer elektronischen Steuer- und Auswerteeinrichtung für den automatischen Lenksignalgeber und den manuellen Lenksignalgeber,
- Fig. 4: eine detaillierte Darstellung des Lenksystems mit einer Lenkachse und nur einem Lenkzylinder zur Verstellung der lenkbaren Räder und zwei parallel angeordneten Steuerventilen,
- Fig. 5: eine Darstellung des Lenksystems wie in Fig. 4, jedoch mit zwei Lenkzylindern, die jeweils über 2 Steuerventile mit Hydraulikflüssigkeit beaufschlagt werden,
- Fig. 6: eine Darstellung des Lenksystems wie in Fig. 4, jedoch mit einem zusätzlichen Umschaltventil, das zwischen den beiden Steuerventilen umschalten kann,
- Fig. 7: eine Darstellung des Lenksystems wie in Fig. 4, jedoch für ein Fahrzeug mit einer lenkbaren Vorder- und Hinterachse.

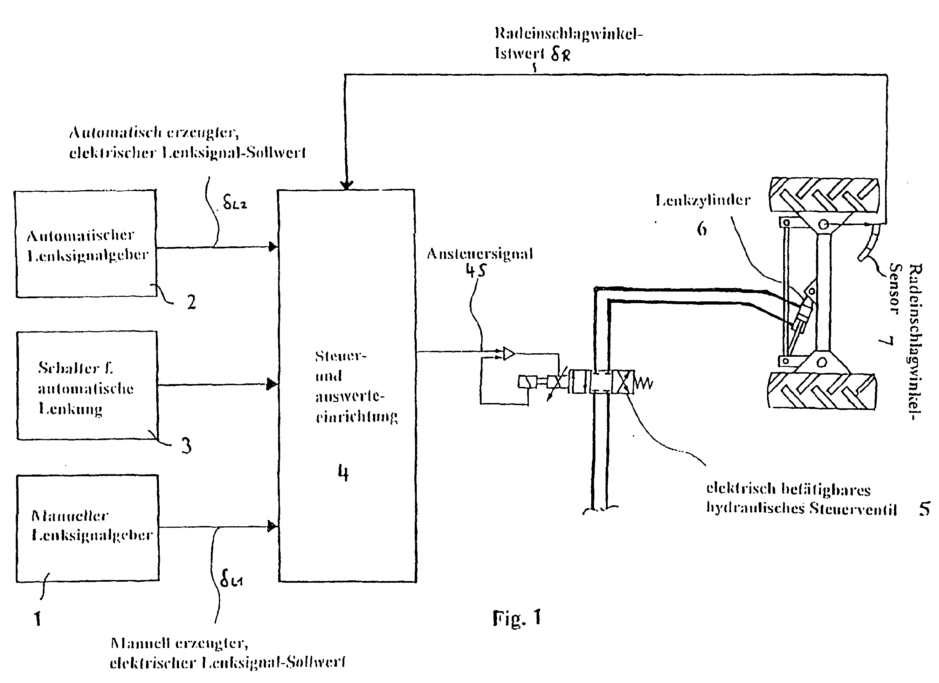

In Fig. 1 ist das Lenksystem in einer ersten Ausführungsform schematisch dargestellt. Zur Verstellung der lenkbaren Räder ist ein hydraulischer, doppeltwirkender Lenkzylinder (6) vorgesehen, der beide Räder der Lenkachse über eine Spurstange verstellt. Zur Messung der Radeinschlagwinkel-Istwerte (δ_{R}) ist ein von einem Winkelgeber (7) gebildeter Sensor vorhanden. Die Regelung der Beaufschlagung des Lenkzylinders (6) mit Hydraulikflüssigkeit erfolgt über ein elektrisch betätigbares, hydraulisches Steuerventil (5). Das elektrische Ansteuersignal (4S) für das Steuerventil (5) wird von einer Steuer- und Auswerteeinrichtung (4) erzeugt, die eingangsseitig mit einem manuellen Lenksignalgeber (1) und einem automatischen Lenksignalgeber (2) verbunden ist, welche die entsprechenden manuellen bzw. automatischen Lenksignale (δ_{L1}, δ_{L2}) erzeugen. Zusätzlich ist die Steuer- und Auswerteeinrichtung (4) eingangsseitig mit einem Schalter (3) verbunden, mit dem zwischen diesen beiden Lenkungsarten (manuell, automatisch) umgeschaltet werden kann.

Aus Gründen der Sicherheit ist für das Einschalten der automatischen Lenkung die Betätigung eines hier nicht gezeigten Sicherheitsschalters notwendig.

Weiterhin ist die Steuer- und Auswerteeinrichtung (4) mit dem Sensor (7) für den Empfang der Radeinschlagwinkel-Istwerte (δ_{R}) verbunden.

Aus dem Vergleich des jeweiligen Radeinschlagwinkel-Istwertes (δ_{R}) mit dem manuellen bzw, automatischen Lenlaignal-Sollwert (δ_{L1,} δ_{L2}) ermittelt die Steuer- und Auswerteeinrichtung das elektrische Ansteuersignal für das hydraulische Steuerventil (5).

Ob die manuellen oder die automatischen Lenksignal-Sollwerte (δ_{L1,} δ_{L2}) zur Ermittlung des Ansteuersignals (4S) verwendet werden, wird in Abhängigkeit von der Stellung des Schalters (3) intern in der Steuer- und Auswerteeinrichtung (4) entschieden.

Da die Größe und die Dynamik der manuell und der automatisch erzeugten Lenksignal-Sollwerte sich naturgemäß voneinander unterscheiden können, sind vorzugsweise in der Steuer- und Auswerteeinrichtung (4) zur Verarbeitung der automatischen und der manuellen Lenksignal-Sollwerte (δ_{L1,} δ_{L2}) zwei unterschiedliche Regelalgorithmen implementiert, wobei der jeweilige Algorithmus über den Schalter (3) aktiviert wird. Darüber hinaus ist es vorgesehen, daß jeder dieser beiden Regelalgorithmen wiederrum für verschiedene Einsatzbereiche des Fahrzeuges Unteralgorithmen aufweist; beispielsweise verschiedene Lenkkennlinienfelder für die Lenkübersetzungen.

Als elektrisch betätigbares, hydraulisches Steuerventil (5) wird vorzugsweise ein Proportionalventil (hier ein elektrisch betätigbares 4/3-Wegeventil) eingesetzt. Damit läßt sich der Volumenstrom zu und von den beiden Kammern des Lenkzylinders (6) proportional zum elektrischen Ansteuerungssignal (4S) einstellen.

Als manueller Lenksignalgeber (1) dient ein Lenkrad (10), an dessen Lenkwelle (11) ein Sensor (11A, 11B) für die Lenkradwinkelmessung angeordnet ist, welcher von einem Doppelpotentiometer zum Abgreifen des Lenkwinkels oder von einem inkrementalen Drehwinkelgeber gebildet wird.

Bei Drehung des Lenkrades erzeugt der inkrementale Drehwinkelgeber Impulse, die einem el. Zähler zugeführt werden, so daß der gemessene Lenkwinkel als digitaler Zahlenwert vorliegt.

In einer Variante ist es vorgesehen, daß der inkrementale Drehwinkelgeber seine Impulse direkt an die Steuer- und Auswerteeinrichtung (4), die dann den el. Zähler aufweist, übermittelt.

In einer alternativen Variante ist der Zähler in dem inkrementalen Drehwinkelgeber integriert, so daß dieser direkt digitale Werte an die Steuer- und Auswerteeinrichtung (4) liefert

Das Doppelpotentiometer liefert analoge Spannungswerte für die gemessenen Lenkwinkel. Je nach Ausführung der Steuer- und Auswerteeinheit (4) sind diese dann über einen A/D-Wandler in einen digitalen Zahlenwert zu transformieren. Auch hier sind zwei Varianten vorgesehen:
a) A/D-Wandler in der Steuer- und Auswerteeinrichtung.,
b) A/D-Wandler Bestandteil des manuellen Lenksignalgebers.

Für den Regelalgorithmus können zueinandergehörende Paare von Lenkradwinkel (δ_{L1}, δ_{L2}) und Radeinschlagwinkel (δ_{R}) in Form einer Wertetabelle abgespeichert sein.

Die Steuer- und Auswerteeinrichtung (4) ist so ausgelegt, daß sie bei eingeschalteter automatischer Lenkung bei einer Bewegung des Lenkrades (10) um einen bestimmten Wert die automatische Lenkung selbständig deaktiviert und die auf die manuelle Lenkung umschaltet. Damit ist die u.a. aus Sicherheitsgründen notwendige Möglichkeit einer schnellen und spontanen Übersteuerung der automatischen Lenkung durch den Fahrer gewährleistet.

Dies ist möglich, da die Steuer- und Auswerteeinrichtung (4) bei eingeschalteter automatischer Lenkung zwar nur die automatisch erzeugten Lenlaignal-Sollwerte (δ_{L2}) zur Regelung benutzt, allerdings werden die manuell erzeugten Lenksignal-Sollwerte (δ_{L1},) weiterhin empfangen.

Durch die Implementierung einer Überwachungsschaltung oder eines Uberwachungsprogrammes für die manuellen Lenksignal-Sollwerte bei eingeschalteter automatischer Lenkung, wird dabei die Möglichkeit des Umschaltens im Falle einer Schwellenwert-Überschreitung für das manuelle Lenksignal geschaffen.

Anstatt eines Lenkrades kann als manueller Lenksignalgeber (1) auch ein Lenkhebel ("Joystick") - nicht dargestellt - eingesetzt werden.

Als automatische Lenksignalgeber (2) werden die bereits vorstehend genannten mechanischen Taster, Echolot- oder Laser-Ortungseinheiten oder Echtzeitortungssysteme (GPS-Empfänger) eingesetzt.

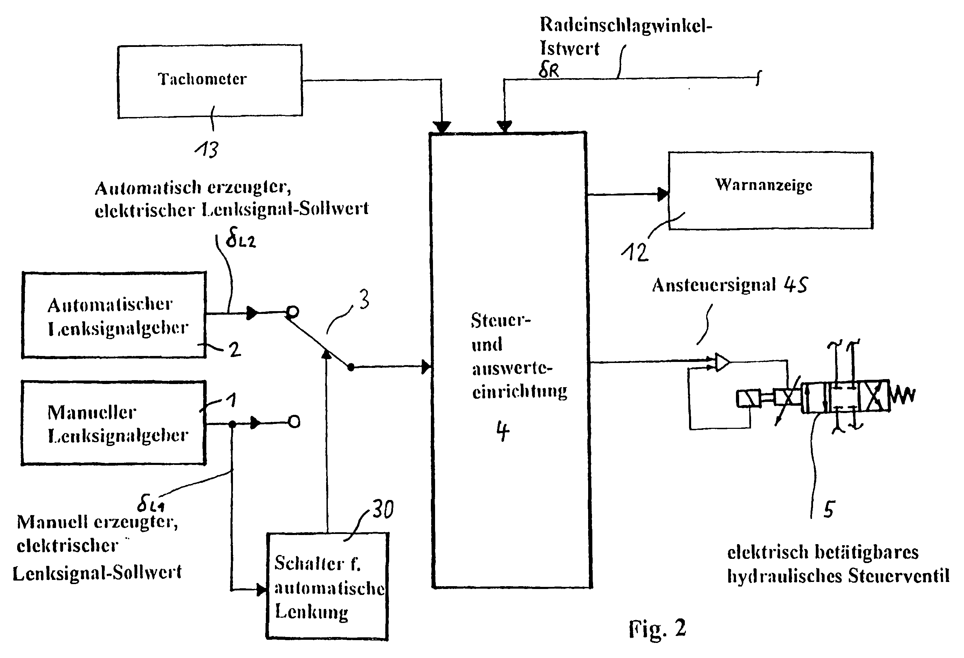

In der Ausführungsform gemäß Fig 2 werden die manuellen und die automatischen Lenksignal-Sollwerte (δ_{L1,} δ_{L2}) der Steuer- und Auswerteeinrichtung nicht gleichzeitig, direkt zugeführt, sondern selektiv über den Schalter (3). Der Steuer- und Auswerteeinrichtung wird über die Schalterstellung mitgeteilt, welche Lenksignal-Sollwerte (manuell oder automatisch) sie empfängt. Die Möglichkeit der manuellen Übersteuerung der automatischen Lenkung ist durch eine zum Schalter (3) gehörige Schalterkontrolleinheit (30) gegeben, welche die manuellen Lenksignal-Sollwerte (δ_{L1}) überwacht.

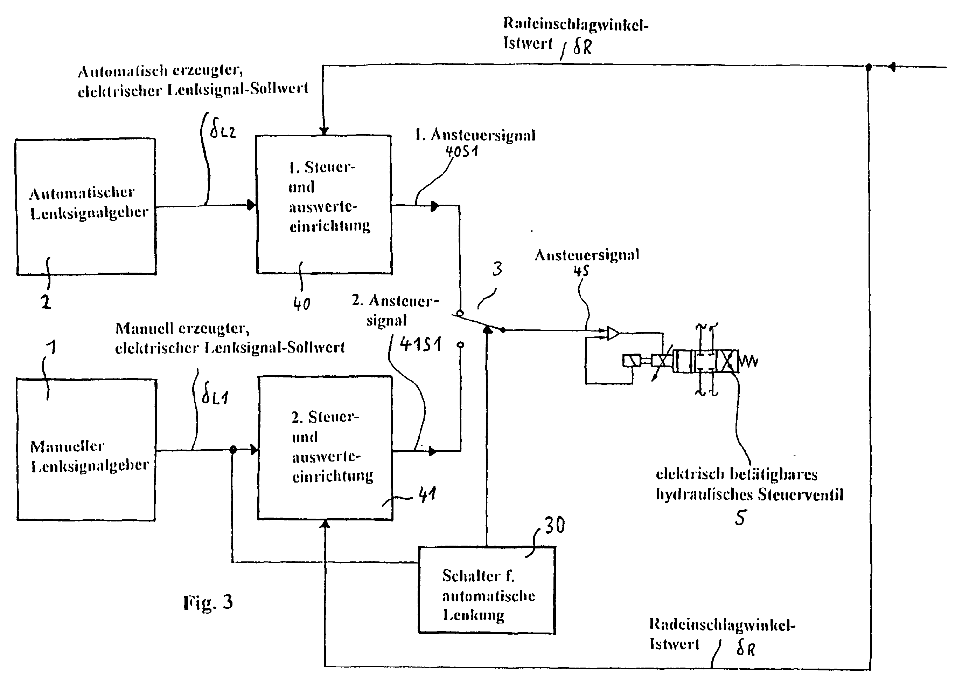

In der Ausführungsform gemäß Fig. 3 ist - im Unterschied zu den Ausführungsformen gemäß Fig. 1+2 - für den manuellen Lenksignalgeber (1) und den automatischen Lenksignalgeber (2) jeweils eine eigene Steuer- und Auswerteeinrichtung vorgesehen. Mit dem Schalter (3) wird dann zwischen den Ansteuersignalen/Ausgängen der Steuer- und Auswerteeinrichtung. umgeschaltet.

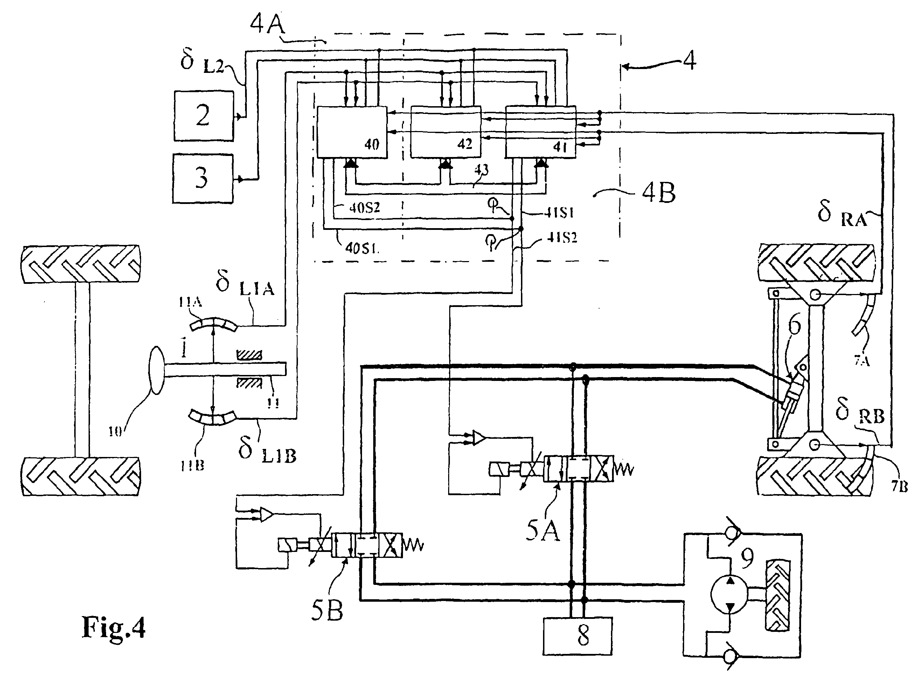

Fig. 4 zeigt eine detaillierte Darstellung des elektrohydraulischen Lenksystems. Aus Sicherheitsgründen weist die Steuer- und Auswerteeinrichtung (4) zwei voneinander unabhängige Steuer- und Auswerteeinheiten (40, 41) und eine Fehlererkennungseinheit (42) auf. Dabei sind jeder der beiden Steuer- und Auswerteeinheiten (40, 41) und der Fehlererkennungseinheit (42) die automatischen und die manuellen Lenksignal-Sollwerte (δ_{L1A}, δ_{L1B}, δ_{L2}), die Radeinschlagwinkel-Istwerte (δ_{RA}, δ_{RB}) und ein Signal für die Stellung des Schalters (3) zugeführt.

Vorzugsweise weisen die Steuer- und Auswerteeinheiten (40, 41) sowie die Fehlererkennungseinheit (42) jeweils einen Mikrocontroller auf, die untereinander zum Austausch von Auswerteergebnissen über einen Datenbus (43) verbunden sind
Bei Fahrzeugen die einen Fahrzeugdatenbus aufweisen ist es vorgesehen, daß dieser Datenbus (43) mit dem Fahrzeugdatenbus verbunden ist oder sogar von diesem gebildet wird.

Durch die Verwendung von Mikrocontrollern sind in einfacher, flexibler Weise verschiedene Regelalgorithmen mit einstellbaren Parametern durch die Installierung entsprechender Programme implementierbar. Auf diese Weise sind auch verschiedene Lenkübersetzungen einfach einstellbar.

Die Steuer- und Auswerteeinheiten (40, 41) und die Fehlererkennungseinheit (42) sind als Master-Slave-Anordnung ausgelegt. Die Steuer- und Auswerteeinheiten (40, 41) sind die Slavecontroller; die Fehlererkennungseinheit (42) der Mastercontroller. Durch den Vergleich aller Auswerteergebnisse kann dann eine Mehrheitsentscheidung getroffen werden. Dies geschieht durch zyklische Übermittlung der Auswerteergebnisse von den Slavecontrollern (40, 41) an den Mastercontroller (42). Der Mastercontroller (42) hat die Aufgabe, den Signalfluß (40S1, 40S2, 41S1, 41S2) zu dem/den Proprotionalventilen (5A, 5B) zu kontrollieren und nur richtige Ansteuersignale an das/die Ventile (5A, 5B) durchzulassen.

Falls einer der Slavecontroller (40, 41) Auswerteergebnisse außerhalb eines vorgegebenen Toleranzbereichs liefert, deaktiviert der Mastercontroller (42) diesen Slavecontroller und schaltet auf den zweiten um.

Da ein gleichzeitiger Ausfall von 2 Controllern sehr unwahrscheinlich ist, ist somit für die Betriebssicherheit der el. Steuerung des Lenksystems ausreichend Vorsorge getroffen.

Zusätzliche Sicherheit wird dadurch erzielt, daß für den ersten Slavecontroller (40) ein separates Steuer- und Auswertegerät (4A) mit unabhängiger Stromversorgung vorgesehen ist. Für den zweiten Slavecontroller (41) und den Mastercontroller (42) sind jeweils weitere oder ein gemeinsames Steuer- und Auswertegerät (4B) vorgesehen.

Außerdem ist zur Notpufferung der Controller neben der Fahrzeugbatterie ein weiterer Akkumulator vorgesehen.

Im hydraulischen Teil des Lenksystems wird die Betriebssicherheit dadurch geschaffen, daß zur Beaufschlagung des Lenkzylinders (6) mit Hydraulikflüssigkeit zwei parallel geschaltete Proportionalventile (5A, 5B) vorgesehen sind, die jeweils mit den Slavecontrollern (40, 41) zum Empfang der Ansteuersignale (40S1, 40S2, 41S1, 41 S2) verbunden sind.

Aus Gründen der übersichtlichen Darstellung sind die getrennt voneinander zu den Proportionalventilen (5A, 5B) laufenden Signalleitungen (40S1, 41S1; 40S2, 41 S2) der beiden Slavecontroller (40, 41) in den mit "P" bezeichneten Punkten zusammengefaßt.

In einer ersten Variante geschieht die Ansteuerung der beiden Proportionalventile (5A, 5B) wie folgt:

Im Normalbetrieb wird nur das erste Proportionalventil (5A) zur Steuerung des Hydraulikstromes an den Lenkzylinder (6) benutzt, während das 2. Proportionalventil (5B) sich in der Sperrstellung befindet.

Im Falle einer unzulässigen, nicht zu eliminierenden Regelabweichung wird, wenn die Auswerteergebnisse der redundant vorhandenen Controller (40, 41, 42) übereinstimmen - d.h. kein Fehler in der el. Steuerung des Lenksystems vorliegt -, auf das zweite Proportionalventil (5B) umgeschaltet. Dies ist erforderlich, wenn in dem ersten Proportionalventil (5A) eine Verstopfung des Ventilleitungsquerschnitts infolge von Verunreinigungen in der Hydraulikflüssigkeit auftritt.

In einer alternativen Variante geschieht die Ansteuerung der beiden Proportionalventil (5A, 5B) wie folgt:

Im Normalbetrieb werden beide Proportionalventile (5A, 5B) zur Steuerung des Hydraulikflüssigkeitstroms an den Lenkzylinder (6) gleichzeitig benutzt. Dabei ist jedes der beiden Proportionalventile allerdings für die Steuerung des insgesamt maximal notwendigen Hydraulikflüssigkeitstroms ausgelegt. In dem Fall, daß eines der beiden Proportionalventile (5A, 5B) eine Störung aufweist, wird das jeweils andere entsprechend so angesteuert, daß die Störung kompensiert wird.

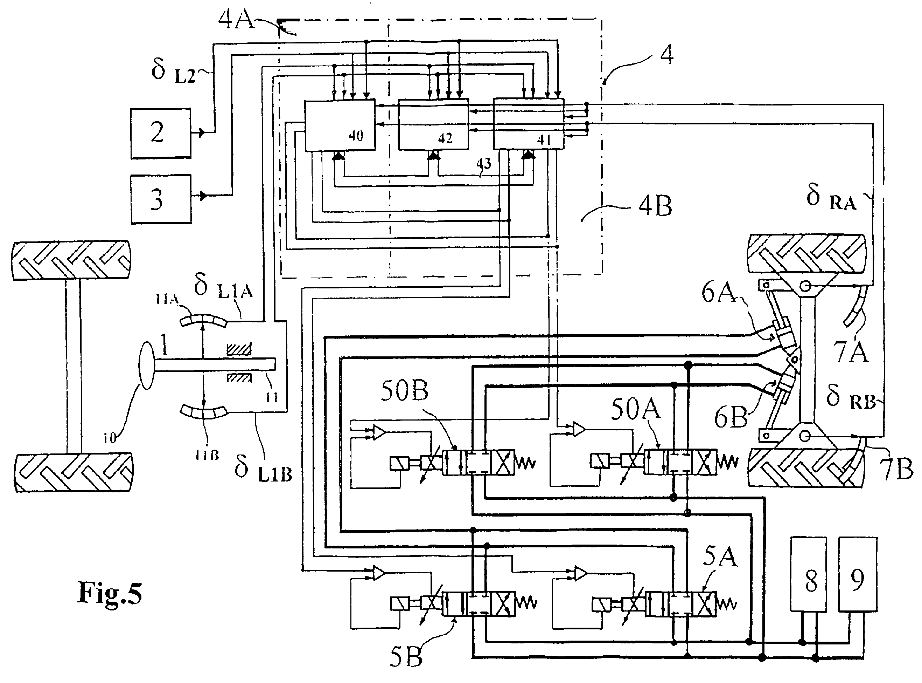

Fig. 5 zeigt im wesentlichen das Lenksystem gemäß Fig. 4. Im Unterschied zu dem Lenksystem aus Fig. 4 ist hierbei für jedes lenkbare Rad ein eigener Lenkzylinder (6A, 6B) vorgesehen; dementsprechend mehr Proportionalventile (5A, 5B, 50A, 50B) und Ansteuerleitungen.

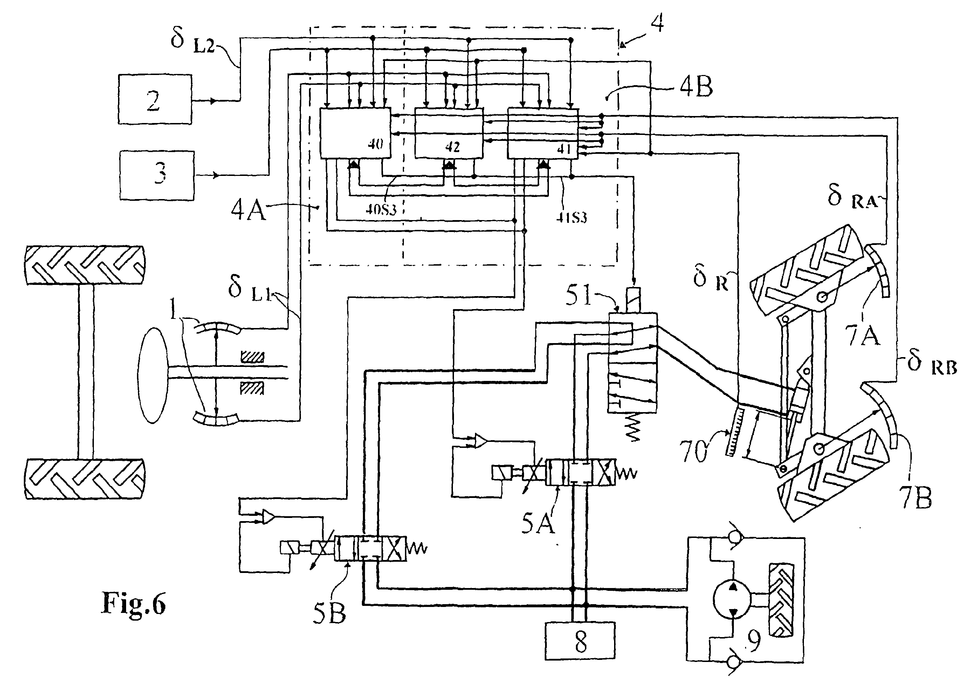

In dem Lenksystem gemäß Fig. 6 ist für die parallel geschalteten Proportionalventile (5A, 5B) ein zusätzliches elektrisch betätigbares, hydraulisches Umschaltventil (51) vorgesehen, das ebenfalls mit den Slavecontrollern (40, 41) zum Empfang von Ansteuersignalen (40S3, 41S3) verbunden ist. So kann im Fall einer Störung in einem der Proportionalventile (5A, 5B) das jeweils andere Proportionalventil mit dem Lenkzylinder (6) verbunden werden.

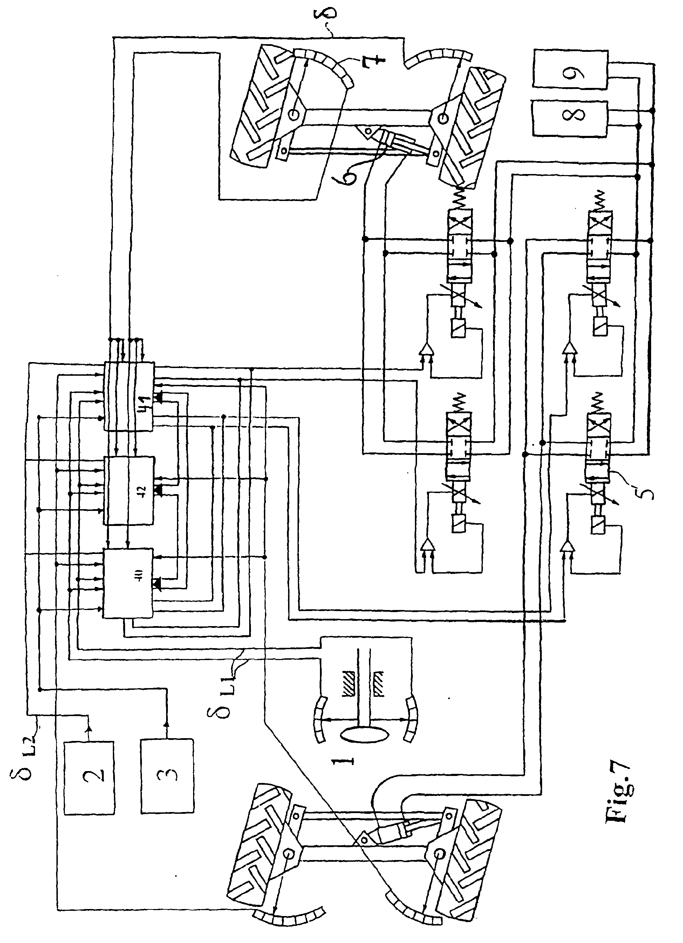

In Fig. 7 ist die Installation des Lenksystems bei einem Fahrzeug mit Allrad-Lenkung gezeigt. Bei gleichsinnig eingeschlagenen Vorder- und Hinterrädern läßt sich beispielsweise eine gewisse Drift von landwirtschaftlichen Fahrzeugen am Hang kompensieren.
Bei einem Fahrzeug mit Allrad-Lenkung ist vorzugsweise sowohl für die Vorderrad-Lenkanlage als auch für die Hinterrad-Lenkanlage jeweils eine eigene Steuer- und Auswerteinrichtung vorgesehen. Dabei kann die Hinterrad-Lenkanlage als manuelle Lenkanlage und die Vorderrad-Lenkanlage als automatische Lenkanlage funktionieren und umgekehrt.

Durch die vorhandene Redundanz sowohl bzgl. der el. Steuerung als auch bzgl. des Hydraulikkreises wird sichergestellt, daß das Fahrzeug auch im Falle einer Störung lenkbar bleibt.

Damit eine Störung vom Fahrer wahrgenommen wird, erzeugt die Steuer- und Auswerteeinrichtung (4) ein Warnsignal (12) - vgl. Fig. 2. Das Warnsignal kann akustisch, optisch oder durch eine andere Warnmöglichkeit, wie z.B. Vibration des Lenkrades, einzeln oder in Kombination dem Fahrer mitgeteilt werden.

Es ist zur Erhöhung der Sicherheit im Fall einer Störung vorgesehen, daß beim Auftreten einer Störung durch die Steuer- und Auswerteeinrichtung (4) für den weiteren Betrieb des Fahrzeugs Beschränkungen in Kraft treten, die je nach Art und Umfang der Störung unterschiedlich sein können.

Eine Beschränkung besteht darin, die Höchstgeschwindigkeit des Fahrzeugs zu begrenzen. Zu diesem Zweck ist die Steuer- und Auswerteeinrichtung (4) mit dem elektronischen Gaspedal -nicht dargestellt- und dem Tachometer (13) des Fahrzeugs verbunden.

Eine weitere Beschränkung besteht darin, daß die weitere Betriebsdauer auf eine bestimmte Reservezeit reduziert wird. Der Fahrer wird damit gezwungen, möglichst bald den Schaden zu beheben oder die nächste Fachwerkstatt aufzusuchen.

Der bzw. die Sensoren (7, 7A, 7B, 70A, 70B) zur Ermittelung der Radeinschlagwinkel-Istwerte (δ_{R}, δ_{RA}, δ_{RB}) sind von einem an dem jeweiligen lenkbaren Rad angeordneten Winkelgeber oder von einem Wegaufnehmer fur den Verschiebeweg des Lenkzylinderkolbens gebildet. Durch das Vorhandensein von zwei Sensoren pro Lenkachse wird ebenfalls die Sicherheit erhöht, falls ein Sensor eine Störung aufweist.

Für den Fall, daß die das hydraulische Lenksystem im Normalfall versorgende Pumpe der Arbeitshydraulik (8) ausfällt, ist eine Notlenkpumpe (9) vorgesehen. Die Notlenkpumpe besteht aus einer Zahnradpumpe, die beim Fahren von den sich drehenden Rädern angetrieben wird.

Für den Fall, daß die Steuer- und Auswerteeinrichtung komplett ausfällt und nicht nur einer der Mikroprozessoren, ist es vorteilhafter Weise vorgesehen, daß in der Fahrerkabine zwei Schalter für Links- und Rechtslenkung vorgesehen sind, die direkt unter Umgehung der Steuer- und Auswerteeinheit mit dem oder den elektrisch betätigbaren, hydraulischen Steuerventilen verbunden sind Diese sind beispielsweise dem Drehwinkelgeber des Lenkrades zugeordnet. Die Steuerung erfolgt dann über die Betätigungsdauer der Schalter.

Abschließend sei noch ausgeführt, daß auch eine Verstellung des manuellen Lenksignalgebers (1) während einer Betriebspause des Fahrzeuges bei abgeschalteter Hydraulikpumpe (8) aus Sicherheitsgründen nicht möglich ist. Zu diesem Zweck ist eine Sperre oder Bremse eingebaut. Darüber hinaus sei angemerkt, daß bei Verwendung eines inkrementalen Lenksignalgebers nur auf nach dem Starten der Hydraulikpumpe erzeugte Lenksignaländerungen reagiert wird.

### Bezugszeichenliste

- 1): manueller Lenksignalgeber
- 10): Lenkrad
- 11): Lenkwelle
- 11A, 11B): Drehwinkelgeber
- δ_{LIA}, δ_{LIB}, δ_{LI}): manuelle Lenksignal-Sollwerte

- 2): automatischer Lenksignalgeber
- δ_{L2}): automatischer Lenksignal-Sollwert

- 3): Schalter für die Umstellung von manueller auf automatische Lenkung
- 30): Schalterkontrolleinheit

- 4): Steuer- und Auswerteeinrichtung
- 40): 1. Steuer- und Auswerteeinheit
- 41): 2. Steuer- und Auswerteeinheit
- 42): 3. Steuer- und Auswerteeinheit/Fehlererkennungseinheit
- 43): Datenbus zwischen den Komponenten
- 4A): Gerät mit unabhängiger Stromversorgung für die 1. Steuer- und Auswerteeinheit
- 4B): Gerät mit unabhängiger Stromversorgung fur die 2. Steuer- und Auswerteeinheit und die Fehlererkennungseinheit
- 40S1, 40S2): Ansteuersignal der 1. Steuer- und Auswerteeinheitrur die hydrauli schen Steuerventile
- 4S): Ansteuersignal
- 40S3): Ansteuersignal der 1 Steuer- und Auswerteeinheit für das Umschaltventil
- 41S1, 41S2): Ansteuersignal der 2. Steuer- und Auswerteeinheit für die hydrauli schen Steuerventile
- 41S3): Ansteuersignal der 2. Steuer- und Auswerteeinheit für das Umschaltventil

- 5, 5A, 5B, 50A, 50B): elektrisch betätigbare, hydraulische Steuerventile
- 51): elektrisch betätigbares, hydraulisches Umschaltventil

- 6, 6A, 6B): Lenkzylinder

- 7, 7A, 7B): Winkelgeber als Sensoren für die Radeinschlagwinkel
- 70A, 70B): Wegaufnehmer für den Lenkzylinderkolben als Sensoren für die Radeinschlagwinkel
- δ_{R}, δ_{RA}, δ_{RB}): Radeinschlagwinkel-Istwerte

- 8): Arbeitshydraulik

- 9): Notlenkpumpe

- 12): Warnsignalanzeige

- 13.): Tachometer

## Patentansprüche

1. Elektrohydraulisches Lenksystem für Fahrzeuge, das eine manuelle Lenkung und eine automatische Lenkung (Autopilot), welche über einen Schalter (3) aktivierbar ist, umfasst, bestehend aus
mindestens einem hydraulischen Lenkzylinder (6) zur Verstellung der lenkbaren Räder,
mindestens einem Sensor (7) zur Ermittelung jeweils der Radeinschlagwinkel-Istwerte ( Δ_{R}),
mindestens einem elektrisch betätigbaren hydraulischen Steuerventil (5), welches die Beaufschlagung des Lenkzylinders (6) mit Hydraulikflüssigkeit regelt, mindestens einem automatischen Lenksignalgeber (2) zur Erzeugung von elektrischen Lenksignal-Sollwerten (Δ_{L2}) für die Radeinschlagwinkel,
einer elektronischen Steuer- und Auswerteeinrichtung (4), wobei der Steuer- und Auswerteeinrichtung (4) jeweils die automatisch erzeugten Lenksignal-Sollwerte ( Δ_{L2}) und die Radeinschlagwinkel-Istwerte (Δ_{R}) zugeführt sind, und die Steuer- und Auswerteeinrichtung (4) unter Verwendung des Radeinschlagwinkel-Istwertes (Δ_{R}) und des automatisch erzeugten Lenksignal-Sollwertes (Δ_{L2}) jeweils ein elektrisches Ansteuersignal (4S) für das hydraulische Steuerventil (5) ermittelt,
**dadurch gekennzeichnet, dass**
für die manuelle Lenkung ein Lenksignalgeber (1) vorgesehen ist, der aus einer manuellen Stellbewegung einen dazu entsprechenden elektrischen Lenksignal-Sollwert (Δ_{L1}) erzeugt, wobei dieser Lenksignal-Sollwert (Δ_{L1}) einer Steuer- und Auswerteeinrichtung (4), welche auch die jeweiligen Radeinschlagwinkel-Istwerte (Δ_{R}) empfängt, zugeführt wird, und die Steuer- und Auswerteeinrichtung (4) unter Verwendung des Radeinschlagwinkel-Istwertes (Δ_{R}) und des manuell erzeugten Lenksignal-Sollwertes (Δ_{L1}) ein elektrisches Ansteuersignal (4S) für das hydraulische Steuerventil (5) ermittelt und wobei der automatische Lenksignalgeber (2) ein Echtzeitortungssystem zur Bestimmung der Position und des Richtungsvektors der Fahrbewegung aufweist, wobei in Verbindung mit einer zuvor geplanten, digitalisierten Fahrtroute, welche auf einer im Fahrzeug integrierten EDV-Anlage gespeichert ist, der automatische, elektrische Lenksignal-Sollwert (Δ_{1,2}) erzeugt wird.

2. Elektrohydraulisches Lenksystem nach Anspruch 1,
**dadurch gekennzeichnet, dass**
der manuelle Lenksignalgeber (1) von einem Lenkrad (10) mit einem Drehwinkelgeber (11, 11A, 11B) für die Lenkradwinkefmessung gebildet ist, wobei der gemessene Lenkradwinkel als manuell erzeugter, elektrischer Lenksignal-Sollwert (Δ_{L1A}, Δ_{L1B}) der Steuer- und Auswerteeinrichtung (4) des Lenksystems zugeführt wird.

3. Elektrohydraulisches Lenksystem nach Anspruch 2
**dadurch gekennzeichnet, dass**
in der Steuer- und Auswerteeinrichtung (4) zueinandergehörende Paare von Lenkradwinkel (Δ_{L1A}, Δ_{L1B}) und Radeinschlagwinkel (Δ_{R}) in Form einer Wertetabelle abgespeichert sind.

4. Elektrohydraulisches Lenksystem nach Anspruch 1,
**dadurch gekennzeichnet, dass**
der Drehwinkelgeber (11,11A,11B) als inkrementaler Drehwinkelgeber ausgeführt ist, der die relative Änderung des Lenkrades (10) zur Erzeugung eines Lenksignal-Sollwertes aufintegriert.

5. Elektrohydraulisches Lenksystem nach Anspruch 1,
**dadurch gekennzeichnet, dass**
der manuelle Lenksignalgeber (1) von einem Lenkhebel ("Joystick") gebildet ist.

6. Elektrohydraulisches Lenksystem nach einem der vorstehenden Ansprüche,
**dadurch gekennzeichnet, dass**
zur Verarbeitung der Lenksignal-Sollwerte (Δ_{L2}, Δ_{L1}) des automatischen Lenksignalgebers (2) und des manuellen Lenksignalgebers (1) eine gemeinsame Steuer- und Auswerteeinrichtung (4) vorgesehen ist.

7. Elektrohydraulisches Lenksystem nach Anspruch 6,
**dadurch gekennzeichnet, dass**
für die automatischen Lenksignal-Sollwerte (Δ_{L2}) und für die manuellen Lenksignal-Sollwerte (Δ_{L1}) jeweils separate Signalleitungen zur Steuer- und Auswerteeinrichtung (4) geführt sind, wobei die Steuer- und Auswerteeinrichtung (4) intern in Abhängigkeit von der Stellung des Schalters (3) für die automatische Lenkung die automatisch oder die manuellen erzeugten, elektrischen Lenksignal-Sollwerte (△_{L2}, △_{L1}) für die weitere Verarbeitung auswählt.

8. Elektrohydraulisches Lenksystem nach Anspruch 6 oder 7,
**dadurch gekennzeichnet, dass**
die Steuer- und Auswerteeinrichtung (4) bei eingeschalteter automatischer Lenkung beim Auftreten einer bestimmten Änderung des manuell erzeugten Lenkwinkel-Sollwertes (Δ_{L1}) die automatische Lenkung selbständig deaktiviert und die manuelle Lenkung aktiviert.

9. Elektrohydraulisches Lenksystem nach Anspruch 6,
**dadurch gekennzeichnet, dass**
die automatisch und die manuell erzeugten Lenksignal-Sollwerte (Δ_{L2,} Δ_{L1}) der Steuer- und Auswerteeinrichtung (4) über den Schalter (3) für die automatische Lenkung je nach Schalterstellung selektiv zugeführt werden.

10. Elektrohydraulisches Lenksystem nach 9,
**dadurch gekennzeichnet, dass**
der Schalter (3) für die automatische Lenkung eine Schalterkontrolleinheit (30) umfasst, und der manuell erzeugte Lenksignal-Sollwert (Δ_{L1}) bei eingeschalteter automatischer Lenkung dieser Schalterkontrolleinheit (30) zugeführt wird, wobei der Schalter (3) beim Auftreten einer bestimmten Änderung der manuell erzeugten Lenksignal-Sollwerte (Δ_{L1}) selbständig auf die manuell erzeugten Lenksignal-Sollwerte (Δ_{L1}) umschaltet.

11. Elektrohydraulisches Lenksystem nach einem der vorstehenden Ansprüche 6 bis 10,
**dadurch gekennzeichnet, dass**
in der Steuer- und Auswerteeinrichtung (4) zur Verarbeitung der automatischen Lenksignal-Sollwerte (Δ_{L2}) und der manuellen Lenksignal-Sollwerte (Δ_{L1}) zwei unterschiedliche Regelalgorithmen implementiert sind, wobei der jeweilige Algorithmus über den Schalter (3) für die automatische Lenkung aktiviert wird.

12. Elektrohydraulisches Lenksystem nach einem der vorstehenden Ansprüche 1 bis 5,
**dadurch gekennzeichnet, dass**
zur Verarbeitung der Lenksignal-Sollwerte (Δ_{L2}) des automatischen Lenksignalgebers (2) eine erste Steuer- und Auswerteeinrichtung mit einem ersten Regelalgorithmus vorgesehen ist, und zur Verarbeitung der Lenksignal-Sollwerte (△_{L1}) des manuellen Lenksignalgebers (1) eine zweite Steuer- und Auswerteeinrichtung mit einem zweiten Regelalgorithmus vorgesehen ist, wobei je nach Stellung des Schalters (3) für die automatische Lenkung das elektrische Ansteuersignal der ersten Steuer- und Auswerteeinrichtung oder der zweiten Steuer- und Auswerteeinrichtung für die Ansteuerung des hydraulischen Steuerventils (5) verwendet wird.

13. Elektrohydraulisches Lenksystem nach-einem der vorstehenden Ansprüche,
**dadurch gekennzeichnet, dass**
die Steuer- und Auswerteeinrichtung (4) mindestens zwei voneinander unabhängige Steuer- und Auswerteeinheiten (40, 41) und die Fehlererkennungseinheit (42) aufweist, wobei jeder der Steuer- und Auswerteeinheiten (40, 41) sowie die Fehlererkennungseinheit (42) die Lenksignal-Sollwerte (Δ_{L1A}. Δ_{L1B}, Δ_{L2}), die Radeinschlagwinkel-Istwerte (Δ_{RA}, Δ_{RB}) und ggf. die Stellung des Schalters (3) für die automatische Lenkung zugeführt sind, und die Steuer und Auswerteeinheiten (40, 41) mit der Fehlererkennungseinheit (42) zum Austausch von Auswerteergebnissen verbunden sind, und im Falle eines Fehlers die fehlerhafte Steuer- und Auswerteeinheit (40, 41) von der Fehlererkennungseinheit (42) deaktiviert wird.

14. Elektrohydraulisches Lenksystem nach einem der vorstehenden Ansprüche,
**dadurch gekennzeichnet, dass**
zur Regelung der Beaufschlagung des Lenkzylinders (6) mit Hydraulikflüssigkeit zwei parallel geschaltete, elektrisch betätigbare, hydraulische Steuerventile (5A, 5B) vorgesehen sind, die jeweils mit der Steuer- und Auswerteeinrichtung (4, 40, 41) zum Empfang der Ansteuersignale (40S1, 40S2, 41S1, 4152) verbunden sind.

15. Elektrohydraulisches Lenksystem nach Anspruch 14,
**dadurch gekennzeichnet, dass**
das erste der beiden Steuerventile (5A) zur Steuerung des Hydraulikflüssigkeitsstroms an den Lenkzylinder (6) benutzt wird, während das zweite Steuerventil (5B) sich in der Sperrstellung befindet, und im Falle einer unzulässigen Regelabweichung die Steuer- und Auswerteeinrichtung (4) zur Regelung auf das zweite Steuerventil (5B) umschaltet.

16. Elektrohydraulisches Lenksystem nach Anspruch 14,
**dadurch gekennzeichnet, dass**
im Normalbetrieb beide Steuerventile (5A, 5B) zur Steuerung des Hydraulikflüssigkeitsstroms an den Lenkzylinder (6) benutzt werden, wobei jedes der Steuerventile (5A, 5B) für die Steuerung des insgesamt maximal notwendigen Hydraulikflüssigkeitsstroms ausgelegt ist, und in dem Fall, dass eines der beiden Steuerventile (5A, 5B) eine Störung aufweist, das jeweils andere Steuerventil von der Steuer- und Auswerteeinrichtung (4) entsprechend so angesteuert wird, dass die Störung in dem anderen Steuerventil kompensiert wird.

17. Elektrohydraulisches Lenksystem nach Anspruch 14,
**dadurch gekennzeichnet, dass**
zur Regelung der Beaufschlagung des Lenkzylinders (6) mit Hydraulikflüssigkeit zwei parallel geschaltete, elektrisch betätigbare, hydraulische Steuerventile (5A, 5B) und ein zusätzliches elektrisch betätigbares, hydraulisches Umschaltventil (51) vorgesehen ist, das ebenfalls von der Steuer- und Auswerteeinrichtung (4, 40, 41) zum Empfang eines Ansteuersignals (40S3, 41 S3) verbunden ist, wobei das Umschaltventil (51) wahlweise das eine oder das andere Steuerventil (5A, 5B) mit dem Lenkzylinder (6) verbindet.

18. Elektrohydraulisches Lenksystem nach einem der vorstehenden Ansprüche,
**dadurch gekennzeichnet, dass**
die Steuer- und Auswerteinrichtung (4) beim Auftreten einer Störung ein Warnsignal (12) erzeugt.

19. Elektrohydraulisches Lenksystem nach einem der vorstehenden Ansprüche,
**dadurch gekennzeichnet, dass**
die Steuer- und Auswerteeinrichtung (4) mit dem Tachometer (13) verbunden ist und im Fall einer Störung im Lenkungssystem eine Beschränkung der Höchstgeschwindigkeit vornimmt.

20. Elektrohydraulisches Lenksystem nach Anspruch 19,
**dadurch gekennzeichnet, dass**
die Steuer- und Auswerteeinrichtung (4) das Antriebsgetriebe des Fahrzeuges herunterregelt bzw. eine Sperre für bestimmte Übersetzungsverhältnisse einschaltet.

21. Elektrohydraulisches Lenksystem nach Anspruch 19,
**dadurch gekennzeichnet, dass**
die Steuer- und Auswerteeinrichtung (4) eine Begrenzung bei dem elektronischen Gaspedal des Fahrzeuges aktiviert.

22. Elektrohydraulisches Lenksystem nach einem der vorstehenden Ansprüche,
**dadurch gekennzeichnet, dass**
eine Verstellung des manuellen Lenksignalgebers (1) während einer Betriebspause des Fahrzeuges bei abgeschalteter Hydraulikpumpe (8) durch eine Sperre oder Bremse verhindert oder erschwert wird.

23. Elektrohydraulisches Lenksystem nach einem der vorstehenden Ansprüche,
**dadurch gekennzeichnet, dass**
durch die Verwendung eines Inkrementalsignalgebers als manuellem Lenksignalgeber während einer Betriebspause des Fahrzeuges bei abgeschalteter Hydraulikpumpe (8) eine Verstellung des manuellen Lenksignalgebers (1) während einer Betriebspause des Fahrzeuges keine Änderung der Lenksignal-Sollwerte erzeugt und somit nach dem Starten der Hydraulikpumpe nur auf dann erfolgende Änderungen der Lenksignal-Sollwerte reagiert wird.

24. Elektrohydraulisches Lenksystem nach einem der vorstehenden Ansprüche,
**dadurch gekennzeichnet, dass**
bei einem Fahrzeug mit Allrad-Lenkanlage sowohl für die Vorderrad- als auch für Hinterrad-Lenkanlage eine eigene Steuer- und Auswerteeinrichtung vorgesehen ist.

## Claims

1. An electrohydraulic steering system for vehicles which includes manual steering and automatic steering (autopilot), which is activatable by way of a switch (3), comprising
at least one hydraulic steering cylinder (6) for displacement of the steerable wheels,
at least one sensor (7) for determining the respective wheel lock angle actual values (Δᵣ),
at least one electrically actuable hydraulic control valve (5) which regulates the supply of hydraulic fluid to the steering cylinder (6),
at least one automatic steering signal sender (2) for producing electrical steering signal reference values (Δ_{L2}) for the wheel lock angles, and
an electronic control and evaluation device (4), wherein the automatically produced steering signal reference values (Δ_{L2}) and the wheel lock angle actual values (Δ_{R}) are respectively fed to the control and evaluation device (4) and the control and evaluation device (4) respectively determines an electrical actuation signal (4S) for the hydraulic control valve (5) using the wheel lock angle actual value (Δ_{R}) and the automatically produced steering signal reference value (Δ_{L2}),
**characterised in that** provided for manual steering is a steering signal sender (1) which from a manual control movement produces an electrical steering signal reference value (△_{L1}) corresponding thereto, wherein that steering signal reference value (△_{L1}) is fed to a control and evaluation device (4) which also receives the respective wheel lock angle actual values (Δ_{R}), and the steering and evaluation device (4) determines an electrical actuation signal (4S) for the hydraulic control valve (5) using the wheel lock angle actual value (Δ_{R}) and the manually produced steering signal reference value (Δ_{LI}) and wherein the automatic steering signal sender (2) has a real time positioning system for determining the position and the directional vector of the travel movement, wherein the automatic, electrical steering signal reference value (Δ_{1,2}) is produced in conjunction with a previously planned, digitised travel route which is stored on an EDP installation integrated in the vehicle.

2. An electrohydraulic steering system according to claim 1 **characterised in that** the manual steering signal sender (1) is formed by a steering wheel (10) with a rotary angle sender (11, 11A, 11B) for steering wheel angle measurement, wherein the measured steering wheel angle is fed as a manually produced, electrical steering signal reference value (Δ_{L1A}, Δ_{L1B}) to the control and evaluation device (4) of the steering system.

3. An electrohydraulic steering system according to claim 2 **characterised in that** pairs of steering wheel angles (Δ_{L1A}, Δ_{L1B}) and wheel lock angles (Δ_{R}) which belong together are stored in the control and evaluation device (4) in the form of a value table.

4. An electrohydraulic steering system according to claim 1 **characterised in that** the rotary angle sender (11, 11A, 11B) is in the form of an incremental rotary angle sender which integrates the relative change in the steering wheel (10) for producing a steering signal reference value.

5. An electrohydraulic steering system according to claim 1 **characterised in that** the manual steering signal sender (1) is formed by a steering lever ('joystick').

6. An electrohydraulic steering system according to one of the preceding claims **characterised in that** there is provided a common control and evaluation device (4) for processing of the steering signal reference values (△_{L2}, △_{L1}) of the automatic steering signal sender (2) and the manual steering signal sender (1).

7. An electrohydraulic steering system according to claim 6 **characterised in that** respective separate signal lines are passed to the control and evaluation device (4) for the automatic steering signal reference values (Δ_{L2}) and for the manual steering signal reference values (Δ_{L1}), wherein the control and evaluation device (4) selects internally in dependence on the position of the switch (3) for automatic steering the automatically or the manually produced, electrical steering signal reference values (△_{L2}, △_{L1}) for further processing.

8. An electrohydraulic steering system according to claim 6 or claim 7 **characterised in that** when automatic steering is switched on upon the occurrence of a given change in the manually produced steering angle reference value (Δ_{L2}) the control and evaluation device (4) independently deactivates automatic steering and activates manual steering.

9. An electrohydraulic steering system according to claim 6 **characterised in that** the automatically and the manually produced steering signal reference values (Δ_{L2}, Δ_{L1}) are selectively fed to the control and evaluation device (4) by way of the switch (3) for automatic steering depending on the respective switch position.

10. An electrohydraulic steering system according to claim 9 **characterised in that** the switch (3) for automatic steering includes a switch control unit (30) and the manually produced steering signal reference value (Δ_{L1}) is fed to said switch control unit (30) when automatic steering is switched on, wherein upon the occurrence of a given change in the manually produced steering signal reference values (Δ_{L1}) the switch (3) independently switches over to the manually produced steering signal reference values (Δ_{L1}).

11. An electrohydraulic steering system according to one of preceding claims 6 to 10 **characterised in that** two different regulating algorithms are implemented in the control and evaluation device (4) for processing the automatic steering signal reference values (Δ_{L2}) and the manual steering signal reference values (Δ_{L1}), wherein the respective algorithm is activated by way of the switch (3) for automatic steering.

12. An electrohydraulic steering system according to one of preceding claims 1 to 5 **characterised in that** there is provided a first control and evaluation device having a first regulating algorithm for processing of the steering signal reference values (Δ_{L2}) of the automatic steering signal sender (2) and that there is provided a second control and evaluation device having a second regulating algorithm for processing of the steering signal reference values (Δ_{L2}) of the manual steering signal sender (1) wherein the electrical actuation signal of the first control and evaluation device or of the second control and evaluation device is used for actuation of the hydraulic control valve (5) depending on the respective position of the switch (3) for automatic steering.

13. An electrohydraulic steering system according to one of the preceding claims **characterised in that** the control and evaluation device (4) has at least two mutually independent control and evaluation units (40, 41) and the error detection unit (42) wherein the steering signal reference values (Δ_{L1A}, Δ_{L1B}, Δ_{L2}), the wheel lock angle actual values (Δ_{RA}, Δ_{RB}) and optionally the position of the switch (3) for automatic steering are fed to each of the control and evaluation units (40, 41) and the error detection unit (42), and the control and evaluation units (40, 41) are connected to the error detection unit (42) for the exchange of evaluation results and in the case of an error the defective control and evaluation unit (40, 41) is deactivated by the error detection unit (42).

14. An electrohydraulic steering system according to one of the preceding claims **characterised in that** for regulating the supply of hydraulic fluid to the steering cylinder (6) there are provided two parallel-connected, electrically actuable, hydraulic control valves (5A, 5B) which are respectively connected to the control and evaluation device (4, 40, 41) for receiving the actuation signals (40S1, 40S2, 41S1, 41S2).

15. An electrohydraulic steering system according to claim 14 **characterised in that** the first of the two control valves (5A) is used for controlling the flow of hydraulic fluid to the steering cylinder (6) while the second control valve (5B) is in the shut-off position and in the event of an inadmissible regulating deviation the control and evaluation device (4) switches over for regulation to the second control valve (5B).

16. An electrohydraulic steering system according to claim 14 **characterised in that** in normal operation both control valves (5A, 5B) are used for controlling the flow of hydraulic fluid to the steering cylinder (6), wherein each of the control valves (5A, 5B) is designed for control of the total maximum necessary flow of hydraulic fluid, and in the situation where one of the two control valves (5A, 5B) has a fault the respective other control valve is suitably so actuated by the control and evaluation device (4) that the fault in the other control valve is compensated.

17. An electrohydraulic steering system according to claim 14 **characterised in that** for regulating the supply of hydraulic fluid to the steering cylinder (6) there are provided two parallel-connected, electrically actuable, hydraulic control valves (5A, 5B) and an additional, electrically actuable, hydraulic switching valve (51) which is also connected by the control and evaluation device (4, 40, 41) for receiving an actuation signal (40S3, 41S3), wherein the switching valve (51) selectively connects one or other of the control valves (5A, 5B) to the steering cylinder (6).

18. An electrohydraulic steering system according to one of the preceding claims **characterised in that** the control and evaluation device (4) produces a warning signal (12) upon the occurrence of a fault.

19. An electrohydraulic steering system according to one of the preceding claims **characterised in that** the control and evaluation device (4) is connected to the tachometer (13) and in the event of a fault in the steering system effects a restriction on the maximum speed.

20. An electrohydraulic steering system according to claim 19 **characterised in that** the control and evaluation device (4) down-shifts the drive transmission of the vehicle or switches on a lock means for given transmission ratios.

21. An electrohydraulic steering system according to claim 19 **characterised in that** the control and evaluation device (4) activates a limitation in respect of the electronic accelerator pedal of the vehicle.

22. An electrohydraulic steering system according to one of the preceding claims **characterised in that** displacement of the manual steering signal sender (1) is prevented or made difficult by a lock means or brake during an interruption in operation of the vehicle when the hydraulic pump (8) is switched off.

23. An electrohydraulic steering system according to one of the preceding claims **characterised in that** displacement of the manual steering signal sender (1) during an interruption in operation of the vehicle does not cause any change in the steering signal reference values due to the use of an incremental signal sender as the manual steering signal sender during an interruption in operation of the vehicle when the hydraulic pump (8) is switched off, and thus the system reacts only to changes which then take place in the steering signal reference values after the hydraulic pump is started.

24. An electrohydraulic steering system according to one of the preceding claims **characterised in that** in a vehicle with an all-wheel steering arrangement a respective control and evaluation device is provided both for the front wheel steering arrangement and also for the rear wheel steering arrangement.

## Revendications

1. Système de direction électrohydraulique pour véhicules, comprenant une direction manuelle et une direction automatique (bloc de pilotage) pouvant être activée par l'intermédiaire d'un commutateur (3), constitué de
- au moins un vérin de direction (6) hydraulique pour déplacer les roues orientables,
- au moins un capteur (7) pour déterminer les valeurs effectives (Δ_{R}) d'angle de braquage des roues,
- au moins un distributeur (5) hydraulique à commande électrique, qui régule l'application de liquide hydraulique au vérin de direction (6),
- au moins un émetteur de signal de braquage automatique (2), destiné à produire des valeurs de consigne (△_{L2}) de signal de braquage électriques pour les angles de braquage des roues,
- un dispositif de commande et de traitement (4) électronique, le dispositif (4) recevant respectivement les valeurs de consigne (Δ_{L2}) de signal de braquage produites par voie automatique et les valeurs effectives (Δ_{R}) d'angle de braquage des roues, et le dispositif de commande et de traitement (4) déterminant chaque fois un signal d'activation (4S) électrique pour le distributeur (5) hydraulique, en utilisant la valeur effective (Δ_{R}) d'angle de braquage des roues et la valeur de consigne (Δ_{L2}) de signal de braquage produite par voie automatique,
**caractérisé en ce que** pour la direction manuelle, il est prévu un émetteur de signal de braquage (1) qui produit, à partir d'un mouvement de réglage manuel, une valeur de consigne (Δ_{L1}) de signal de braquage électrique correspondante, ladite valeur de consigne (Δ_{L1}) de signal de braquage étant transmise à un dispositif de commande et de traitement (4) qui reçoit également les valeurs effectives (Δ_{R}) respectives d'angle de braquage des roues, et le dispositif de commande et de traitement (4) déterminant un signal d'activation (4S) électrique pour le distributeur (5) hydraulique, en utilisant la valeur effective (Δ_{R}) d'angle de braquage des roues et la valeur de consigne (△_{L1}) de signal de braquage produite par voie manuelle, et l'émetteur de signal de braquage automatique (2) présentant un système de localisation en temps réel destiné à déterminer la position et le vecteur de direction du déplacement, la valeur de consigne (Δ_{1,2}) de signal de braquage électrique automatique étant produite en relation avec un itinéraire numérisé, préalablement établi, qui est mémorisé dans une installation informatique intégrée au véhicule.

2. Système de direction électrohydraulique selon la revendication 1, **caractérisé en ce que** l'émetteur de signal de braquage manuel (1) est constitué d'un volant de direction (10) avec un capteur d'angle de rotation (11, 11A, 11B) pour la mesure de l'angle du volant, l'angle de volant mesuré étant transmis en tant que valeur de consigne (Δ_{L1A}, Δ_{L1B}) de signal de braquage électrique produite par voie manuelle, au dispositif de commande et de traitement (4) du système de direction.

3. Système de direction électrohydraulique selon la revendication 2, **caractérisé en ce que** des paires associées d'angle de volant (Δ_{L1A}, Δ_{L1B}) et d'angle de braquage des roues (Δ_{R}) sont enregistrées sous forme de table de valeurs dans le dispositif de commande et de traitement (4).

4. Système de direction électrohydraulique selon la revendication 1, **caractérisé en ce que** le capteur d'angle de rotation (11, 11A, 11B) est réalisé sous forme de capteur d'angle de rotation incremental qui effectue une intégration de la modification relative du volant de direction (10) aux fins de produire une valeur de consigne de signal de braquage.

5. Système de direction électrohydraulique selon la revendication 1, **caractérisé en ce que** l'émetteur de signal de braquage manuel (1) est constitué d'une manette de commande ("joystick").

6. Système de direction électrohydraulique selon une des revendications précédentes, **caractérisé en ce qu'**il est prévu un dispositif de commande et de traitement (4) commun pour réaliser le traitement des valeurs de consigne (Δ_{L2}, Δ_{L2}) de signal de braquage de l'émetteur de signal de braquage automatique (2) et de l'émetteur de signal de braquage manuel (1).

7. Système de direction électrohydraulique selon la revendication 6, **caractérisé en ce que** des lignes de signaux séparées pour les valeurs de consigne de signal de braquage automatiques (Δ_{L2}) et pour les valeurs de consigne de signal de braquage manuelles (Δ_{L1}) mènent au dispositif de commande et de traitement (4), ledit dispositif de commande et de traitement (4) sélectionnant de manière interne, en fonction de la position du commutateur (3) pour la direction automatique; les valeurs de consigne de signal de braquage électriques (Δ_{L1}, Δ_{L2}), produites par voie automatique ou manuelle, en vue de leur traitement ultérieur.

8. Système de direction électrohydraulique selon la revendication 6 ou 7, **caractérisé en ce que**, lorsque la direction automatique est activée, le dispositif de commande et de traitement (4) désactive spontanément la direction automatique et active la direction manuelle, en cas d'apparition d'un changement défini de la valeur de consigne (Δ_{L1}) de signal de braquage produite par voie manuelle.

9. Système de direction électrohydraulique selon la revendication 6, **caractérisé en ce que** les valeurs de consigne (Δ_{L2}, Δ_{L1}) de signal de braquage, produites par voie automatique et manuelle, sont transmises au dispositif de commande et de traitement (4) de manière sélective via le commutateur (3) pour la direction automatique, en fonction de la position du commutateur.

10. Système de direction électrohydraulique selon la revendication 9, **caractérisé en ce que** le commutateur (3) pour la direction automatique comprend une unité de contrôle de commutateur (30) et la valeur de consigne (Δ_{L1}) de signal de braquage, produite manuellement, est transmise à cette unité de contrôle de commutateur (30) lorsque la direction automatique est activée, le commutateur (3), en cas de variation définie des valeurs de consigne (Δ_{L1}) de signal de braquage produites manuellement, commutant spontanément aux valeurs de consigne (Δ_{L1}) de signal de braquage produites manuellement.

11. Système de direction électrohydraulique selon une des revendications 6 à 10 précédentes, **caractérisé en ce que** deux algorithmes de régulation différents sont mis en application dans le dispositif de commande et de traitement (4), en vue du traitement des valeurs de consigne de signal de braquage automatiques (Δ_{L2}) et des valeurs de consigne de signal de braquage manuelles (Δ_{L1}), l'algorithme concerné étant activé par l'intermédiaire du commutateur (3) pour la direction automatique.

12. Système de direction électrohydraulique selon une des revendications 1 à 5 précédentes, **caractérisé en ce que**, pour le traitement des valeurs de consigne (Δ_{L2}) de signal de braquage de l'émetteur de signal de braquage automatique (2), il est prévu un premier dispositif de commande et de traitement avec un premier algorithme de régulation; et pour le traitement des valeurs de consigne (Δ_{L1}) de signal de braquage de l'émetteur de signal de braquage manuel (1), il est prévu un deuxième dispositif de commande et de traitement avec un deuxième algorithme de régulation, le signal d'activation électrique soit du premier dispositif de commande et de traitement soit du deuxième dispositif de commande et de traitement étant utilisé pour activer le distributeur (5) hydraulique, en fonction de la position du commutateur (3) pour la direction automatique.

13. Système de direction électrohydraulique selon une des revendications précédentes, **caractérisé en ce que** le dispositif de commande et de traitement (4) présente au moins deux unités de commande et de traitement (40, 41), indépendantes l'une de l'autre, ainsi que l'unité de détection d'erreur (42), les valeurs de consigne (Δ_{L1A}, Δ_{L1B}, Δ_{L2}) de signal de braquage, les valeurs effectives (Δ_{RA}, Δ_{RB}) d'angle de braquage des roues et, le cas échéant, la position du commutateur (3) pour la direction automatique étant transmises à chacune des unités de commande et de traitement (40, 41) ainsi qu'à l'unité de détection d'erreur (42), et les unités de commande et de traitement (40, 41) étant reliées à l'unité de détection d'erreur (42) à des fins d'échange de résultats de traitement et, en cas d'erreur, l'unité de commande et de traitement (40, 41) défectueuse étant désactivée par l'unité de détection d'erreur (42).

14. Système de direction électrohydraulique selon une des revendications précédentes, **caractérisé en ce que**, pour réguler l'alimentation du vérin de direction (6) en liquide hydraulique, il est prévu deux distributeurs (5A, 5B) hydrauliques à commande électrique, connectés en parallèle, qui sont reliés chacun au dispositif de commande et de traitement (4, 40, 41) en vue de recevoir les signaux d'activation (40S1, 40S2, 41S1, 41S2).

15. Système de direction électrohydraulique selon la revendication 14, **caractérisé en ce que** le premier (5A) des deux distributeurs est utilisé pour commander le flux de liquide hydraulique alimentant le vérin de direction (6), tandis que le deuxième distributeur (5B) se trouve en position de fermeture et, en cas d'écart de réglage inadmissible, le dispositif de commande et de traitement (4) commute au deuxième distributeur (5B) pour assurer la régulation.

16. Système de direction électrohydraulique selon la revendication 14, **caractérisé en ce que**, en service normal, les deux distributeurs (5A, 5B) sont utilisés pour commander le flux de liquide hydraulique alimentant le vérin de direction (6), chacun des distributeurs (5A, 5B) étant conçu pour commander le flux de liquide hydraulique global maximal nécessaire et, dans le cas où l'un des deux distributeurs (5A, 5B) présente une perturbation, l'autre distributeur est activé de façon correspondante par le dispositif de commande et de traitement (4), de manière à ce que la perturbation dans l'autre distributeur soit compensée.

17. Système de direction électrohydraulique selon la revendication 14, **caractérisé en ce que** pour réguler l'alimentation du vérin de direction (6) en liquide hydraulique, il est prévu deux distributeurs (5A, 5B) hydrauliques à commande électrique, connectés en parallèle, et une vanne de commutation (51) hydraulique supplémentaire à commande électrique, qui est également connectée au dispositif de commande et de traitement (4) en vue de recevoir un signal d'activation (40S3, 41S3), la vanne de commutation (51) reliant au choix l'un ou l'autre distributeur (5A, 5B) au vérin de direction (6).

18. Système de direction électrohydraulique selon une des revendications précédentes, **caractérisé en ce que** lors de l'apparition d'une perturbation, le dispositif de commande et de traitement (4) produit un signal d'alarme (12).

19. Système de direction électrohydraulique selon une des revendications précédentes, **caractérisé en ce que** le dispositif de commande et de traitement (4) est relié au tachymètre (13) et, en cas de perturbation dans le système de direction, procède à une limitation de la vitesse maximale.

20. Système de direction électrohydraulique selon la revendication 19, **caractérisé en ce que** le dispositif de commande et de traitement (4) règle vers le bas le mécanisme d'entraînement du véhicule ou active un moyen de blocage pour des rapports de transmission définis.

21. Système de direction électrohydraulique selon la revendication 19, **caractérisé en ce que** le dispositif de commande et de traitement (4) active une limitation au niveau de l'accélérateur électronique du véhicule.

22. Système de direction électrohydraulique selon une des revendications précédentes, **caractérisé en ce que** pendant un temps d'arrêt du véhicule, lorsque la pompe hydraulique (8) est coupée, le déplacement de l'émetteur de signal de braquage manuel (1) est empêché ou rendu plus diffcile par un moyen de blocage ou un frein.

23. Système de direction électrohydraulique selon une des revendications précédentes, **caractérisé en ce que** l'utilisation d'un émetteur de signal incrémental en tant qu'émetteur de signal de braquage manuel fait que pendant un temps d'arrêt du véhicule, lorsque la pompe hydraulique (8) est coupée, le déplacement de l'émetteur de signal de braquage manuel (1) ne produit pas de modification des valeurs de consigne de signal de braquage et que par conséquent, après le démarrage de la pompe hydraulique, le système ne réagit qu'aux modifications des valeurs de consigne des signal de braquage qui sont effectuées à cet instant.

24. Système de direction électrohydraulique selon une des revendications précédentes, **caractérisé en ce que** dans un véhicule équipé d'un système de direction toutes roues motrices, un dispositif de commande et de traitement distinct est prévu aussi bien pour le système de direction des roues avant que pour le système de direction des roues arrière.
